# EUROPEAN PATENT APPLICATION

(11) **EP 3 604 868 A1**
(43) Date of publication of application: **05.02.2020**
(21) Application number: 18777061.5
(22) Date of filing: 26.03.2018
(51) Int. Cl.: F16J 15/3204, F16J 15/3244

(54) **SEALING DEVICE**

(30) Priority: 28.03.2017 JP 2017063759
(71) Applicant: NOK Corporation, Tokyo 105-8585 (JP)
(72) Inventor: ITO Sosuke, Fujisawa-shi Kanagawa 251-0042 (JP); INOUE Masahiko, Fujisawa-shi Kanagawa 251-0042 (JP); SAKANO Yuya, Fukushima-shi Fukushima 960-1193 (JP); MATSUI Hiroki, Fukushima-shi Fukushima 960-1193 (JP); HAMAMOTO Kokichi, Fukushima-shi Fukushima 960-1193 (JP); NAKAGAWA Takehiro, Fukushima-shi Fukushima 960-1193 (JP); YONAI Hisato, Fukushima-shi Fukushima 960-1193 (JP)
(74) Representative: Weickmann, Hans
(86) International application number: PCT/JP2018/012236
(87) International publication number: WO 2018/181227

(57) **Abstract**

Provided is a sealing apparatus which can suppress ooze of a target to be sealed regardless of a value of rotational speed of a shaft even in the case where pumping action is utilized.

A sealing apparatus (1) includes a sealing apparatus body (2) and a slinger (3). The sealing apparatus body (2) includes an annular reinforcing ring (10) and an annular elastic body portion (20) formed of an elastic body mounted on the reinforcing ring (10). The slinger (3) includes a flange portion (31) which is an annular portion extending toward an outer peripheral side. The elastic body portion (20) includes an end-face lip (21) which is an annular lip extending toward an inner side (arrow a direction) and contacts the flange portion (31) from an outer side (arrow b direction). At least one groove (33) is formed on the other side (outer side) of the flange portion (31) of the slinger (3), on a surface of the end-face lip (21) on an inner peripheral side (inner peripheral surface (22)), a plurality of radial projections (23) are formed side by side in a circumferential direction, and at least one circumferential projection (24) is formed.

## Description

### Technical Field

The present invention relates to a sealing apparatus for realizing sealing between a shaft and a hole into which this shaft is to be inserted.

### Background Art

In a vehicle, general-purpose machine or the like, in order to prevent leakage of a target to be sealed, such as a lubricant, for example, and in order to seal a gap between a shaft and a hole into which this shaft is to be inserted, a sealing apparatus has been conventionally used. In such a sealing apparatus, sealing between the shaft and the sealing apparatus is realized by causing a seal lip to be brought into contact with the shaft or with an annular member mounted on the shaft. Contact between this seal lip and the shaft for providing sealing also becomes sliding resistance (torque resistance) to the shaft. In recent years, in response to a request for fuel efficiency of a vehicle or the like, a sealing apparatus is desired to reduce sliding resistance to the shaft, and is desired to have a structure which can reduce sliding resistance to the shaft while maintaining or improving sealing performance.

It is considered to increase the number of seal lips in order to improve sealing performance of the sealing apparatus. However, sliding resistance increases as a result of the increase in the number of seal lips. To address this, a structure is disclosed where, instead of realizing sealing by increasing the number of seal lips, a screw structure is provided to a seal lip or to an annular member mounted on a shaft so as to improve sealing performance of a sealing apparatus through pumping action exerted by the screw structure (see, for example, Patent Literatures 1, 2).

### Document List

### Patent Literatures

Patent Literature 1: Japanese Patent No. 5637172
Patent Literature 2: International Publication No. WO2015/190450

### Summary of Invention

### Technical Problem

In such a conventional sealing apparatus which utilizes pumping action, it is possible reduce sliding resistance while realizing improvement of sealing performance. However, in such a conventional sealing apparatus which utilizes pumping action, that is, in a so-called end-surface seal-type sealing apparatus where a seal lip contacts a flange surface of a slinger fixed to a shaft, a target to be sealed may ooze outside when rotational speed of the shaft becomes high.

In this manner, there has been a demand for the conventional sealing apparatus, which utilizes pumping action, to have a structure where a target to be sealed does not ooze even in the case where the rotational speed of the shaft becomes high.

The present invention has been made in view of the above-mentioned problem, and it is an object of the present invention to provide a sealing apparatus which can suppress ooze of a target to be sealed regardless of a value of rotational speed of a shaft even in the case where pumping action is utilized.

### Solution to Problem

To achieve the above-described object, a sealing apparatus according to the present invention is a sealing apparatus for sealing an annular gap between a shaft and a hole into which the shaft is to be inserted, the sealing apparatus is characterized by including: a sealing apparatus body to be fitted into the hole; and a slinger to be mounted on the shaft. The sealing apparatus body includes a reinforcing ring annular around an axis line, and an elastic body portion which is formed of an elastic body attached to the reinforcing ring and which is annular around the axis line, the slinger includes a flange portion which is a portion extending toward an outer peripheral side and annular around the axis line, the elastic body portion includes an end-face lip which is a lip extending toward one side in a direction of the axis line, contacting the flange portion from another side in the direction of the axis line, and annular around the axis line, at least one groove is formed on the other side of the flange portion of the slinger, on a surface of the end-face lip on an inner peripheral side, a plurality of radial projections are formed side by side in a circumferential direction, and at least one circumferential projection is formed, the radial projections extend from the other side toward the one side in a spiral manner in a rotational direction of the shaft, and are formed on the inner peripheral side of a slinger contact portion, which is a portion of the end-face lip where the end-face lip contacts the slinger, and the circumferential projection extends around the axis line on the other side of an end portion of the radial projection on the one side, and projects from the end-face lip on the other side of the slinger contact portion in the direction of the axis line.

In a sealing apparatus according to one aspect of the present invention, the circumferential projection forms a clearance between the circumferential projection and a side surface of at least one of the radial projections which faces an opposite side to the rotational direction of the shaft.

In a sealing apparatus according to one aspect of the present invention, the circumferential projection is formed on the other side of a pumping region in the sealing apparatus.

In a sealing apparatus according to one aspect of the present invention, the radial projections are formed on the end-face lip at intervals from the slinger contact portion.

In a sealing apparatus according to one aspect of the present invention, the radial projections are formed at intervals from the slinger contact portion so as to reach a pumping region from a circular current region in the sealing apparatus.

In a sealing apparatus according to one aspect of the present invention, the groove formed on the slinger is a screw groove.

### Effects of Invention

According to the sealing apparatus of the present invention, it is possible to suppress ooze of a target to be sealed regardless of a value of rotational speed of a shaft even in the case where pumping action is utilized.

### Brief Description of the Drawings

[Fig. 1] A cross-sectional view showing a cross section taken along an axis line x for illustrating the schematic configuration of a sealing apparatus according to a first embodiment of the present invention;
[Fig. 2] A partially enlarged cross-sectional view showing, in an enlarged manner, a part of the cross section taken along the axis line of the sealing apparatus according to the first embodiment of the present invention;
[Fig. 3] A partially enlarged perspective view of an elastic body portion of the sealing apparatus shown in Fig. 1 in a state where a portion of the elastic body portion on the inner peripheral side from a base portion is cut on a plane taken along the axis line;
[Fig. 4] A view of a slinger of the sealing apparatus shown in Fig. 1 as viewed from the outside;
[Fig. 5] A partially enlarged cross-sectional view of the sealing apparatus according to the first embodiment of the present invention in a usage state where the sealing apparatus is mounted on a housing and on a shaft inserted into a shaft hole;
[Fig. 6] A view for illustrating a state of flow of a target to be sealed which is caused by action of radial projections and a circumferential projection on an end-face lip in the sealing apparatus according to the first embodiment of the present invention;
[Fig. 7] A partially enlarged perspective view of an elastic body portion of a sealing apparatus according to a second embodiment of the present invention in a state where a portion of the elastic body portion on the inner peripheral side from a base portion is cut on a plane taken along the axis line;
[Fig. 8] A view for illustrating a state of flow of a target to be sealed which is caused by action of radial projections and a circumferential projection on an end-face lip in the sealing apparatus according to the second embodiment of the present invention;
[Fig. 9] A cross-sectional view showing a cross section taken along the axis line for illustrating the schematic configuration of a sealing apparatus according to a third embodiment of the present invention;
[Fig. 10] A partially enlarged cross-sectional view showing, in an enlarged manner, a part of the cross section taken along the axis line of the sealing apparatus according to the third embodiment of the present invention;
[Fig. 11] A perspective view of a sealing apparatus body of the sealing apparatus according to the third embodiment of the present invention as viewed from the inside;
[Fig. 12] A partial perspective view of the sealing apparatus body showing a cross section taken along a line A-A in Fig. 11;

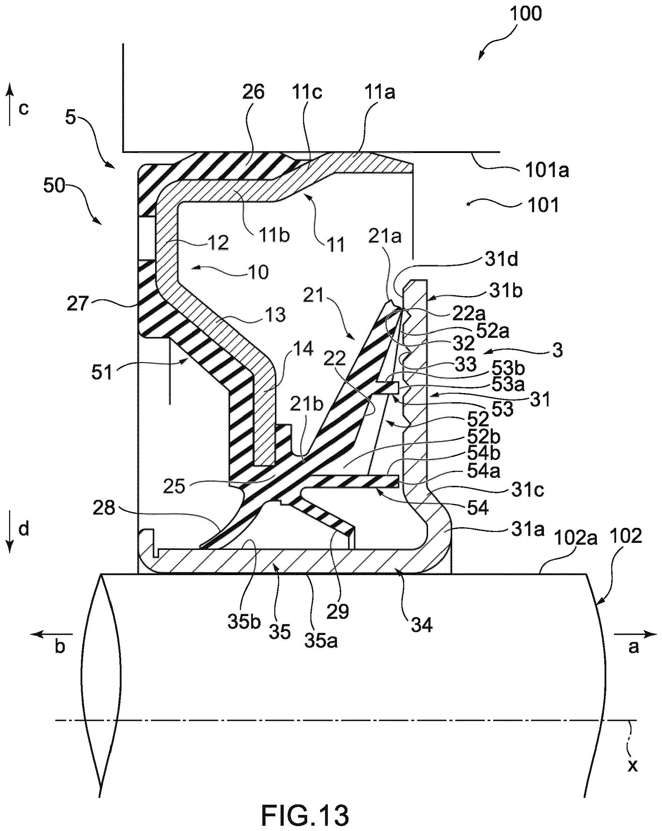

[Fig. 13] A partially enlarged cross-sectional view of the sealing apparatus according to the third embodiment of the present invention shown in Fig. 9 in a usage state where the sealing apparatus is mounted on a housing and on a shaft inserted into a shaft hole;
[Fig. 14] A view showing a modification of the sealing apparatus according to the first embodiment of the present invention;
[Fig. 15] A view showing a modification of the sealing apparatus according to the second embodiment of the present invention;
[Fig. 16] A view showing a modification of the sealing apparatus according to the third embodiment of the present invention; and
[Fig. 17] Views for describing modifications of a groove of the slinger of the sealing apparatus, wherein Fig. 17(a) shows one modification of the groove, and Fig. 17(b) shows another modification of the groove.

### Description of Embodiments

Hereinafter, embodiments of the present invention will be described with reference to the accompanying drawings.

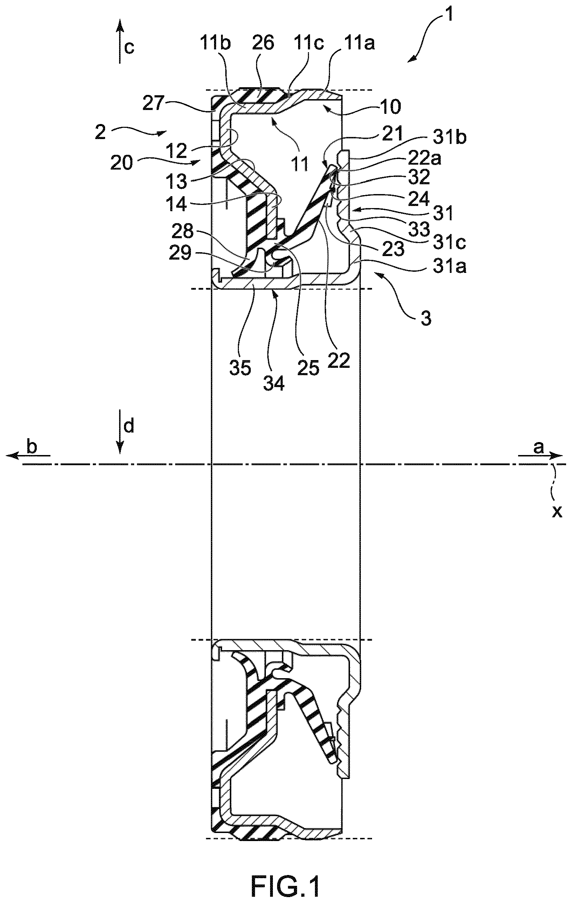

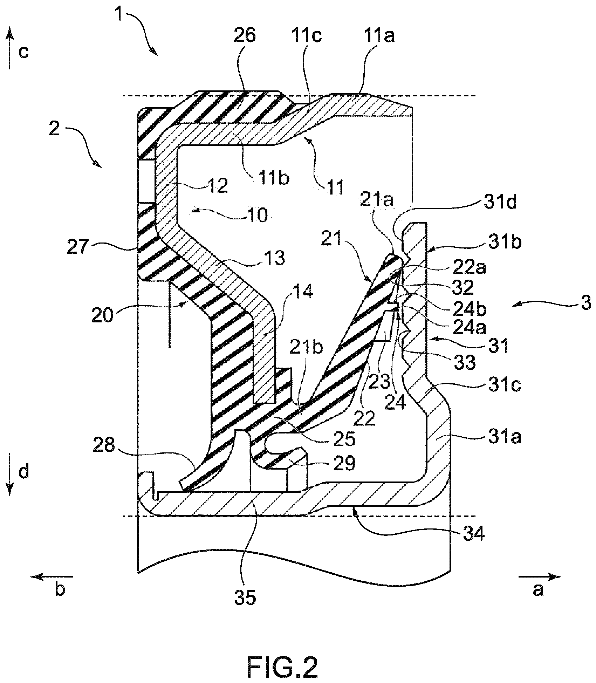

Fig. 1 is a cross-sectional view showing a cross section taken along an axis line x for illustrating the schematic configuration of a sealing apparatus 1 according to a first embodiment of the present invention. Fig. 2 is a partially enlarged cross-sectional view showing, in an enlarged manner, a part of the cross section taken along an axis line x of the sealing apparatus 1 according to the first embodiment of the present invention. The sealing apparatus 1 according to the present embodiment is a sealing apparatus for sealing an annular gap between a shaft and a hole into which this shaft is to be inserted. The sealing apparatus 1 according to the present embodiment is used, in a vehicle or a general-purpose machine, to seal a gap between a shaft and a hole (shaft hole) which is formed at a housing or the like, and into which this shaft is inserted. For example, the sealing apparatus is used to seal an annular space between a crankshaft of an engine and a crank hole, which is a shaft hole formed at a front cover or a cylinder block and a crankcase. Targets to which the sealing apparatus 1 according to the first embodiment of the present invention is applied are not limited to the above.

Hereinafter, for the purpose of convenience of the description, a direction indicated by an arrow "a" (see Fig. 1) in the direction of the axis line x (one side in the direction of the axis line) is set as an inner side, and a direction indicated by an arrow "b" (see Fig. 1) in the direction of the axis line x (another side in the direction of the axis line) is set as an outer side. More specifically, the inner side is a side of space to be sealed (target-to-be-sealed side) and a side of space where a target to be sealed, such as a lubricant, exists, and the outer side is an opposite side of the inner side. Further, in a direction perpendicular to the axis line x (hereinafter, also referred to as "radial direction"), a direction away from the axis line x (a direction indicated by an arrow "c" in Fig. 1) is set as an outer peripheral side, and a direction approaching the axis line x (a direction indicated by an arrow "d" in Fig. 1) is set as an inner peripheral side.

As shown in Fig. 1, the sealing apparatus 1 includes a sealing apparatus body 2 to be fitted into a hole as a mounting target which will be described later, and a slinger 3 to be mounted on a shaft as a mounting target which will be described later. The sealing apparatus body 2 includes a reinforcing ring 10 annular around axis line x, and an elastic body portion 20 which is formed of an elastic body attached to the reinforcing ring 10 and which is annular around the axis line x. The slinger 3 includes a flange portion 31 which is a portion extending toward the outer peripheral side (in the direction indicated by the arrow "c"), and annular around the axis line x. The elastic body portion 20 includes an end-face lip 21end-face lip which is a lip extending toward one side (the inner side, in the direction indicated by arrow "a") in the direction of the axis line x, contacting the flange portion 31 from another side (the outer side, in the direction indicated by an arrow "b") in the direction of the axis line x, and annular around the axis line x.

At least one groove 33 is formed on another side (outer side) of the flange portion 31 of the slinger 3. On a surface of the end-face lip 21 on the inner peripheral side (inner peripheral surface 22), a plurality of radial projections 23 are formed side by side in a circumferential direction, and at least one circumferential projection 24 is formed.

As will be described later, the radial projections 23 extend from the other side (outer side) toward the one side (inner side) in a spiral manner in a rotational direction of a shaft (slinger 3) which will be described later, and are formed on the inner peripheral side of a slinger contact portion 22a, which is a portion of the end-face lip 21 where the end-face lip 21 contacts the slinger 3.

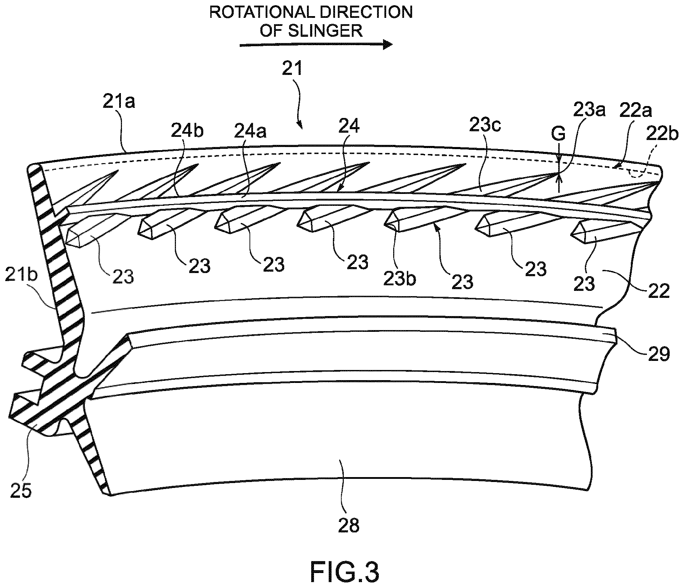

As will be described later, the circumferential projection 24 extends around the axis line x on the other side (outer side) of an end portion (inner end 23a) of the radial projection 23 on the one side (inner side) (see Fig. 3 which will be described later), and projects from the end-face lip 21 on the other side of the slinger contact portion 22a in the direction of the axis line x.

Hereinafter, respective configurations of the sealing apparatus body 2 and the slinger 3 of the sealing apparatus 1 will be specifically described.

As shown in Fig. 1 and Fig. 2, the reinforcing ring 10 of the sealing apparatus body 2 is an annular metal member which is centered or substantially centered on the axis line x and is formed so that the sealing apparatus body 2 is pressed, engaged and fitted into a shaft hole of a housing which will be described later. The reinforcing ring 10 includes, for example, a tubular portion 11 which is a tubular portion located on the outer periphery side, a disk portion 12 which is a hollow disk-shaped portion extending from a tip portion on the outer side of the cylindrical portion 11 to the inner periphery side, a conical ring portion 13 which is a conical cylindrical annular portion extending from a tip portion on the inner periphery side of the disk portion 12 to the inner side and the inner periphery side, and a disk portion 14 which is a hollow disk-shaped portion extending in the radial direction from a tip portion on the inner side or the inner periphery side of the conical ring portion 13 to the inner periphery side and reaching a tip portion on the inner periphery side of the reinforcing ring 10. More specifically, the tubular portion 11 of the reinforcing ring 10 includes an outer periphery side cylindrical portion 11a which is a cylindrical or substantially cylindrical portion located on the outer periphery side, an inner periphery side cylindrical portion 11b which is a cylindrical or substantially cylindrical portion extending on the outer side and the inner periphery side of the outer periphery side cylindrical portion 11a, and a connecting portion 11c which is a portion connecting the outer periphery side cylindrical portion 11a and the inner periphery side cylindrical portion 11b. The outer periphery side cylindrical portion 11a of the tubular portion 11 is fitted into a shaft hole 101 so that, when the sealing apparatus body 2 is fitted into the shaft hole 101 of the housing which will be described later, the axis line x of the sealing apparatus body 2 matches an axis line of the shaft hole 101. An elastic body portion 20 is attached to the reinforcing ring 10 from a substantially outer periphery side and the outer side, so as to reinforce the elastic body portion 20.

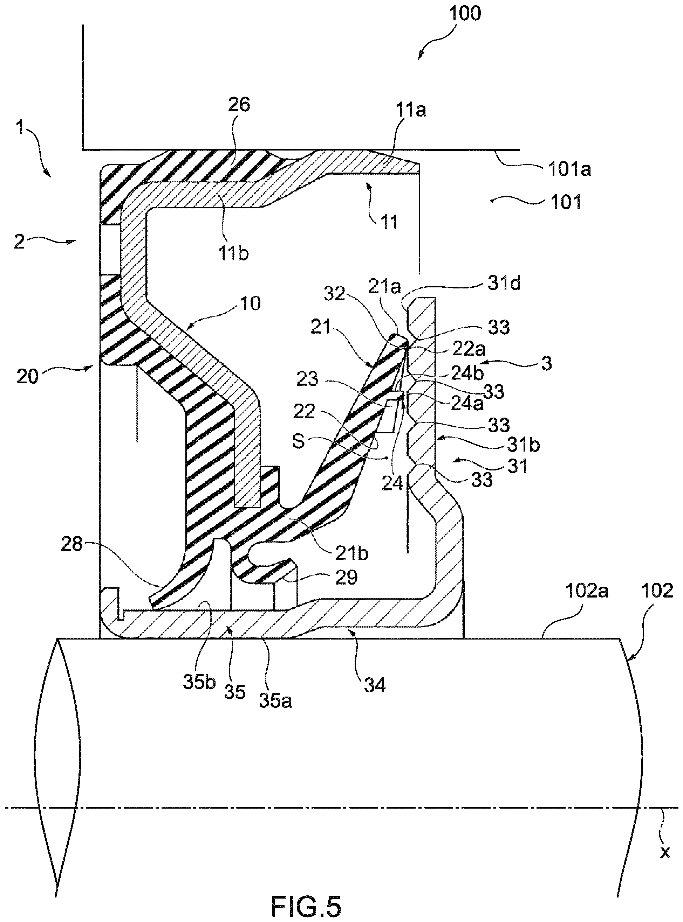

As illustrated in Fig. 1 and Fig. 2, the elastic body portion 20 includes a base portion 25 which is a portion attached to a tip portion on the inner periphery side of the disk portion 14 of the reinforcing ring 10, a gasket portion 26 which is a portion attached to the tubular portion 11 of the reinforcing ring 10 from the outer periphery side, and a rear cover portion 27 which is a portion attached to the reinforcing ring 10 between the base portion 25 and the gasket portion 26 from the outer side. More specifically, as illustrated in Fig. 2, the gasket portion 26 is attached to the inner periphery side cylindrical portion 11b of the tubular portion 11 of the reinforcing ring 10. Further, an outer diameter of the gasket portion 26 is greater than a diameter of an inner periphery surface (see Fig. 5) of the shaft hole which will be described later. Therefore, in the case where the sealing apparatus body 2 is fitted into the shaft hole which will be described later, the gasket portion 26 is compressed in the radial direction between the inner periphery side cylindrical portion 11b of the reinforcing ring 10 and the shaft hole and seals the gap between the shaft hole and the inner periphery side cylindrical portion 11b of the reinforcing ring 10. By this means, space between the sealing apparatus body 2 and the shaft hole 51 is sealed. The gasket portion 26 does not have to be have an outer diameter greater than the diameter of the inner periphery surface of the shaft hole over the whole axis line x direction, and may have the outer diameter partially greater than the diameter of the inner periphery surface of the shaft hole. For example, an annular convex portion whose tip has a diameter greater than the diameter of the inner periphery surface of the shaft hole may be formed on a surface on the outer periphery side of the gasket portion 26.

Further, at the elastic body portion 20, the end-face lip 21 extends from the base portion 25 to the inner side (direction of the arrow a) in an annular shape centered on or substantially centered on the axis line x, and is formed so that, in the usage state of the sealing apparatus 1 which will be described later where the sealing apparatus 1 is attached to a desired position at an attachment target, a tip portion contacts the flange portion 31 of the slinger 3 from the outer side with a predetermined interference (slinger contact portion 22a). The end-face lip 21 has, for example, a conical cylindrical shape whose diameter becomes greater toward the inner side (direction of the arrow a) in the axis line x direction. That is, as illustrated in Fig. 1 and Fig. 2, the end-face lip 21 extends obliquely with respect to the axis line x from the base portion 25 to the inner side and the outer periphery side on a cross-section along the axis line x (hereinafter, also simply referred to as a "cross-section"). On the inner peripheral surface 22 of the end-face lip 21, the plurality of radial projections 23 are provided, in addition, at least one circumferential projection 24 is provided. Details of the radial projections 23 and the circumferential projection 24 will be described later.

Further, the elastic body portion 20 includes a dust lip 28 and an intermediate lip 29. The dust lip 28 is a lip extending from the base portion 25 toward the axis line x, extends from the base portion 25 in an annular shape centered on or substantially centered on the axis line x, and is formed so that, in the usage state of the sealing apparatus 1 which will be described later, a tip portion contacts the slinger 3 from the outer periphery side with a predetermined interference. The dust lip 28 has, for example, a conical cylindrical shape whose diameter becomes smaller toward the outer side (direction of the arrow b) in the axis line x direction. The dust lip 28 prevents a foreign matter such as dust and moisture from intruding inside of the sealing apparatus 1 from the outer side which is the opposite side of the target-to-be-sealed side in the usage state. The dust lip 28 may be formed so as not to contact the slinger 3 in the usage state of the sealing apparatus 1.

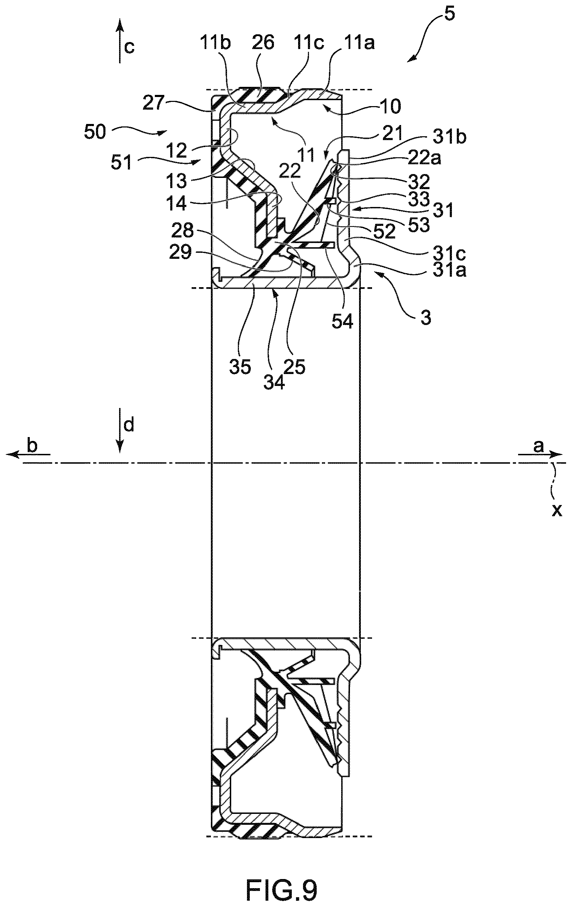

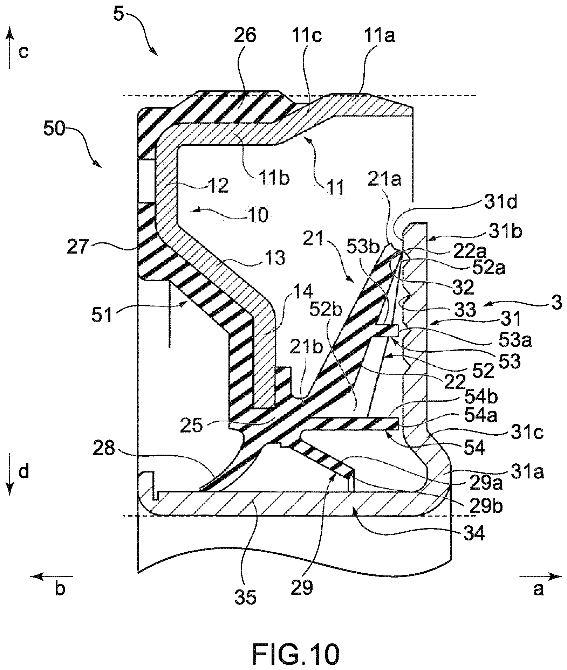

As illustrated in Fig. 2, the intermediate lip 29, which is a lip extending from the base portion 25 toward the inner side to have a substantially L shape in cross section, extends from the base portion 25 in an annular shape centered on or substantially centered on the axis line x, and forms an annular concave portion which opens toward the inner side between the intermediate lip 29 and the base portion 25. The intermediate lip 29 does not contact the slinger 3 in the usage state of the sealing apparatus 1 which will be described later. The intermediate lip 29 is formed to, in the usage state, in the case where a target to be sealed oozes inside over the slinger contact portion 22a of the end-face lip 21 which contacts the slinger 3, accommodate the oozing target to be sealed in the concave portion formed between the intermediate lip 29 and the base portion 25. As illustrated in Fig. 9 and Fig. 10 which will be described later, the intermediate lip 29 may have a conical cylindrical shape whose diameter becomes smaller toward the inner side in the axis line x direction. The intermediate lip 29 may be formed to contact the slinger 3 in the usage state of the sealing apparatus 1.

Next, the shape of the end-face lip 21 will be described in more detail. Fig. 3 is a partially enlarged perspective view of the elastic body portion 20 as viewed from the inner peripheral side in a state where a portion of the elastic body portion 20 on the inner peripheral side from the base portion 25 is cut on a plane taken along the axis line x. As shown in Fig. 3, on the inner peripheral surface 22 of the end-face lip 21, the plurality of radial projections 23 are arranged at equal angular intervals or substantially equal angular intervals in a circumferential direction on the same or substantially the same circumference, thus being arranged at equal pitch intervals or substantially equal pitch intervals. As described above, each radial projection 23 extends from the outer side (lower side in Fig. 3) toward the inner side (upper side in Fig. 3) in a spiral manner in the rotational direction of the shaft (slinger 3) which will be described later. That is, each radial projection 23 extends from the root 21b side of the end-face lip 21 toward the tip 21a side of the end-face lip 21 in an inclined manner or in a bending manner to the rotational direction of the slinger 3. Further, each radial projection 23 is formed away from the slinger contact portion 22a by an interval. Accordingly, each radial projection 23 is formed on the inner peripheral side (outer side) of the slinger contact portions 22a. That is, each radial projection 23 is formed at a side of a root 21b of the end-face lip 21 with respect to the slinger contact portion 24.

At the end-face lip 21, the radial projections 23 are formed at intervals from the slinger contact portion 22a. Specifically, as shown in Fig. 3, the inner ends 23a, which are the end portions of the radial projections 23 on the inner side (outer peripheral side), are located at positions away from an outer edge 22b, which is an edge portion of the slinger contact portion 22a on the outer side (inner peripheral side), by a predetermined interval G in a direction along the axis line x along the inner peripheral surface 22. This interval G is an interval such that each of the radial projections 23 at least partially exist in a region on the inner periphery side of a region pumping region) where pumping action based on the groove 33 of the slinger 3 occurs in the usage state of the sealing apparatus 1 which will be described later..

Further, as shown in Fig. 2, each radial projection 23 is formed in a shape so as not to contact the slinger 3 in the usage state of the sealing apparatus 1. That is, a height of each radial projection 23 from the inner peripheral surface 22 and the interval G are set so that the radial projection 23 does not contact a surface on the outer side of the flange portion 31 of the slinger 3 in the usage state. In the present embodiment, as shown in Fig. 2 and Fig. 3, the radial projection 23 is formed such that the height of the radial projection 23 from the inner peripheral surface 22 increases from the inner end 23a toward an outer end 23b, which is an end portion of the end-face lip 21 on the root 21b side, the height of the radial projection 23 from the inner peripheral surface 22 is not limited to such a height. The radial projection 23 may have a fixed height from the inner peripheral surface 22 within a range from the inner end 23a to the outer end 23b or the height of the radial projection 23 from the inner peripheral surface 22 may decrease from the inner end 23a toward the outer end 23b. Alternatively, the height of the radial projection 23 from the inner peripheral surface 22 within the range from the inner end 23a to the outer end 23b may be any of the various combinations of the above-mentioned increasing height, decreasing height, and fixed height. Further, the shape of the radial projection 23 in cross section orthogonal to the extending direction of the radial projection 23 may be any of various shapes including a triangular shape, a quadrangular shape, an inverted U shape and the like, for example. The radial projection 23 is formed in a shape which does not contact the slinger 3 in the usage state of the sealing apparatus 1, whereby sliding resistance to the slinger 3 does not increase by the radial projections 23.

Further, as shown in Fig. 3, the shape of the radial projection 23 in the extending direction may be any of various shapes, such as a shape which is tapered from the outer end 23b toward the inner end 23a, and a shape having a fixed width in a direction orthogonal to the extending direction within the range between the outer end 23b and the inner end 23a. Further, the projection 23 may extend in a straight manner or in a bending manner within the range between the inner end 23a and the outer end 23b.

As shown in Fig. 3, on the inner peripheral surface 22 of the end-face lip 21, at least one circumferential projection 24 is formed on the same or substantially the same circumference centered or substantially centered on the axis line x. In the present embodiment, one circumferential projection 24 is formed on the end-face lip 21. As described above, the circumferential projection 24 extends around the axis line x at a position on the outer side of the inner ends 23a of the radial projections 23 (on the root 21b side of the end-face lip 21). In the present embodiment, the circumferential projection 24 is formed at a position on the other side (on the outer side or the inner peripheral side) of the pumping region which will be described later in the sealing apparatus 1. It is preferable that the circumferential projection 24 be formed in a circular current region which will be described later.

As shown in Fig. 1 and Fig. 2, the circumferential projection 24 projects from the end-face lip 21 in a region on the outer side of the slinger contact portion 22a in the direction of the axis line x, a tip 24a, which is an end portion of the circumferential projection 24 on the inner side, is located on the outer side of the slinger contact portion 22a in the direction of the axis line x. As described above, the circumferential projection 24 is formed in a shape such that the circumferential projection 24 does not contact the slinger 3 in the usage state of the sealing apparatus 1, whereby sliding resistance to the slinger 3 does not increase by the circumferential projection 24.

Further, as shown in Fig. 2, the circumferential projection 24 projects more toward the inner side in the direction of the axis line x than the radial projection 23. It is not always necessary that the circumferential projection 24 projects more toward the inner side in the direction of the axis line x than the radial projection 23, the projection amount of the circumferential projection 24 in the direction of the axis line x may be equal to the projection amount of the radial projection 23 in the direction of the axis line x. Further, the shape of the circumferential projection 24 in cross section (see Fig. 2) orthogonal to the extending direction of the circumferential projection 24 is not limited to a rectangular shape, and may be any of various shapes including a triangular shape, a quadrangular shape, an inverted U shape and the like, for example. It is preferable that an outer peripheral surface 24b, which is a surface of the circumferential projection 24 facing the outer peripheral side, be a surface facing the outer peripheral side at least in the usage state of the sealing apparatus 1, and be a surface extending along the axis line x, or be a surface which is inclined toward the inner peripheral surface 22 side and extends obliquely with respect to the axis line x to the outer peripheral side.

As described above, the elastic body portion 20 includes the end-face lip 21, the base portion 25, the gasket portion 26, the rear cover portion 27, the dust lip 28, and the intermediate lip 29, respective portions are integrated, and the elastic body portion 20 is integrally formed with the same material.

The above-described reinforcing ring 10 is formed with a metal material, and examples of this metal material can include, for example, stainless steel and SPCC (cold rolled steel sheet). Further, examples of the elastic body of the elastic body portion 20 can include, for example, various kinds of rubber materials. The various kinds of rubber materials can include, for example, synthetic rubber such as nitrile rubber (NBR), hydrogenated nitrile rubber (H-NBR), acryl rubber (ACM) and fluorine-containing rubber (FKM).

The reinforcing ring 10 is manufactured through, for example, press work or forging, and the elastic body portion 20 is molded through cross-linking (vulcanization) molding using a mold. Upon this cross-linking molding, the reinforcing ring 10 is disposed in the mold, the elastic body portion 20 is adhered to the reinforcing ring 10 through cross-linking adhesion, and the elastic body portion 20 and the reinforcing ring 10 are integrally molded.

The slinger 3 is an annular member attached to the shaft in the usage state of the sealing apparatus 1 which will be described later, and is an annular member centered on or substantially centered on the axis line x. The slinger 3 has a cross-section having a substantially L shape, and includes the flange portion 31 and a cylindrical or substantially cylindrical tubular portion 34 which is connected to an end portion on the inner periphery side of the flange portion 31 and which extends in the direction of the axis line x.

The flange portion 31 specifically includes an inner peripheral side disk portion 31a having a hollow disk shape or a substantially hollow disk shape extending from the tubular portion 34 in the radial direction, an outer peripheral side disk portion 31b in a hollow disk shape or a substantially hollow disk shape which expands on the outer peripheral side of the inner peripheral side disk portion 31a and which extends in the radial direction, and a connecting portion 31c which connects an end portion on the outer peripheral side of the inner peripheral side disk portion 31a and an end portion on the inner peripheral side of the outer peripheral side disk portion 31b. The outer peripheral side disk portion 31b is located outer side of the inner peripheral side disk portion 31a in the direction of the axis line x. Note that the shape of the flange portion 31 is not limited to the above-described shape, and may be various shapes in accordance with an application target. For example, the flange portion 31 does not have to include the inner peripheral side disk portion 31a and the connecting portion 31c, and the outer peripheral side disk portion 31b may extend to the tubular portion 34 and may be connected to the tubular portion 34, and may be a portion in a hollow disk shape or a substantially hollow disk shape extending from the tubular portion 34 in the radial direction.

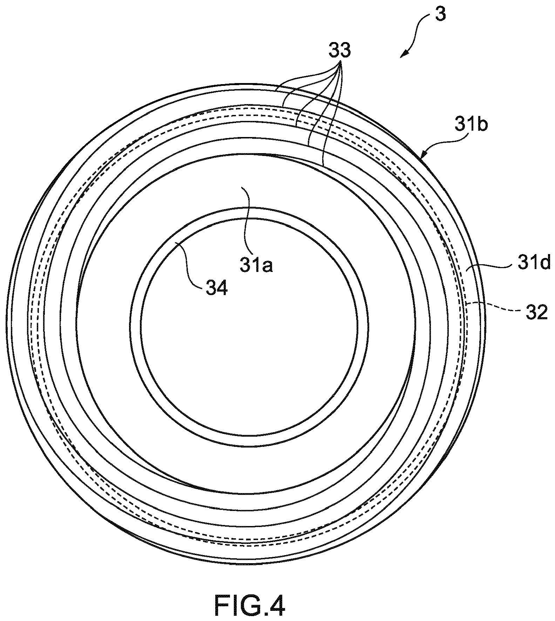

A lip contact portion 32 which is a portion where the slinger 3 contacts the end-face lip 21 is located on the outer side surface 31d which is a surface facing the outer side of the outer peripheral side disk portion 31b at the flange portion 31. It is preferable that the outer side surface 31d is a surface along a plane expanding in the radial direction. Further, as illustrated in Fig. 4, a groove 33 is formed with a concave portion which is concave inward on the outer side surface 31d of the flange portion 31. The groove 33 is, for example, a screw groove. With this groove 33, it is possible to cause pumping action when the slinger 3 rotates. On the outer side surface 31d of the flange portion 31, the groove 33 is formed over a region from the inner peripheral side of the lip contact portion 32 to the outer peripheral side of the lip contact portion 32. The groove 33 may be formed while extending from an end portion on the inner peripheral side toward an end portion on the outer periphery side on the outer side surface 31d of the outer peripheral side disk portion 31b, or may be formed in a region (periphery) of a width of part of the radial direction of the outer side surface 31d including the lip contact portion 32. Further, the groove 33 may be located on the inner peripheral side of the lip contact portion 32 on the outer side surface 31d of the outer peripheral side disk portion 31b. For example, a plurality of grooves 33 are formed on the outer side surface 31d of the flange portion 31, and, on the outer side surface 31d of the flange portion 31, as illustrated in Fig. 4, for example, four screw grooves 33 are formed, and these four screw grooves 33 form a four-start screw. The number of grooves 33 and a shape formed by the grooves 33 extending may be other types of screws other than the four-start screw. The grooves 33 have, for example, a shape along a line drawn on a plane when a screw groove in a spiral manner formed on a conical surface is projected on the plane orthogonal to an axis line of this conical surface.

Further, at the slinger 3, as illustrated in Fig. 2, the tubular portion 34 has a cylindrical portion 35 which is at least partially cylindrical or substantially cylindrical portion, and this cylindrical portion 35 is formed so as to be able to be fitted into the shaft. That is, an inner diameter of the cylindrical portion 35 is smaller than a diameter of the outer peripheral surface of the shaft so that the cylindrical portion 35 can be interference-fitted at the shaft 52. The slinger 3 is not limited to a part fixed by the cylindrical portion 35 being interference-fitted at the shaft, and may be fixed at the shaft through adhesion at the tubular portion 34, or may be fixed at the shaft using other publicly known fixing method. Note that the whole of the tubular portion 34 may be formed with the cylindrical portion 35.

The slinger 3 is made using a metal material as a base material, and, for example, made using SPCC (cold rolled steel sheet) as a base material, by phosphate coating being performed on the SPCC to perform rust-proofing. Examples of the phosphate coating can include, for example, zinc phosphate coating. With the slinger 3 having high rust-proofing, it is possible to suppress occurrence of rust at the lip contact portion 32 which is a sliding portion with respect to the end-face lip 21, so that it is possible to maintain a sealing function and sealing performance of the end-face lip 21 longer. Further, because the slinger 3 is subjected to rust-proofing, it is possible to suppress change of the shape of the groove 33 due to rusting, so that it is possible to suppress reduction of a pumping effect exerted by the groove 33. As a base material of the slinger 3, other metals such as stainless, which excels in rust resistance and rust-proofness may be used. Further, rust-proofing to be performed on the base material of the slinger 3 may be other treatment such as metal plating.

Action of the sealing apparatus 1 having the above-described configuration will be described next. Fig. 5 is a partially enlarged cross-sectional view of the sealing apparatus 1 in a usage state where the sealing apparatus 1 is attached to the housing 100 as an attachment target and the shaft 102 inserted into the shaft hole 101 which is a through-hole formed at the housing 100. The housing 100 is, for example, a front cover of an engine or a cylinder block and a crank case, and the shaft hole 101 is a crank hole formed at the front cover, or the cylinder block and the crank case. Further, the shaft 102 is, for example, a crank shaft.

As illustrated in Fig. 5, in the usage state of the sealing apparatus 1, the sealing apparatus body 2 is fitted into the shaft hole 101 by being pressed into the shaft hole 101, and the slinger 3 is attached to the shaft 102 by being interference-fitted at the shaft 102. More specifically, the outer peripheral side cylindrical portion 11a of the reinforcing ring 10 contacts the inner peripheral surface 101a of the shaft hole 101, so that a shaft center of the sealing apparatus body 2 is made to match a shaft center of the shaft hole 101, and the gasket portion 26 of the elastic body portion 20 tightly contacts the inner peripheral surface 101a of the shaft hole 101 by the gasket portion 26 of the elastic body portion 20 being compressed in the radial direction between the inner periphery surface 101a of the shaft hole 101 and the inner peripheral side cylindrical portion 11b of the reinforcing ring 10, so that sealing between the sealing apparatus body 2 and the shaft hole 101 is realized. Further, the cylindrical portion 35 of the slinger 3 is pressed into the shaft 102, and the inner peripheral surface 35a of the cylindrical portion 35 tightly contacts the outer peripheral surface 102a of the shaft 102, so that the slinger 3 is fixed at the shaft 102.

In the usage state of the sealing apparatus 1, relative positions between the sealing apparatus body 2 and the slinger 3 in the axis line x direction are determined so that the end-face lip 21 of the elastic body portion 20 contacts the lip contact portion 32 which is the portion of the outer side surface 31d of the outer peripheral side disk portion 31b of the flange portion 31 of the slinger 3 at the slinger contact portion 24 which is the portion on a side of the tip 21a of the inner periphery surface 22. Further, a portion on the tip side of the dust lip 28 contacts the tubular portion 34 of the slinger 3 from the outer peripheral side. The dust lip 28, for example, contacts the outer peripheral surface 35b of the cylindrical portion 35 of the slinger 3.

In this manner, in the usage state of the sealing apparatus 1, the end-face lip 21 contacts the lip contact portion 32 of the flange portion 31 so that the slinger 3 can slide at the lip contact portion 32 at the slinger contact portion 22a, and the end-face lip 21 and the slinger 3 aiming at preventing the target to be sealed such as a lubricant from oozing inside from the side of the target to be sealed beyond the slinger contact portion 24 and the lip contact portion 32. Further, the dust lip 28 contacts the tubular portion 34 so that the tubular portion 34 of the slinger 3 can slide, and aims at preventing the foreign matter from entering inside from outside.

Further, in the usage state of the sealing apparatus 1, the groove 33 which forms a four-start screw formed at the outer peripheral side disk portion 31b of the flange portion 31 of the slinger 3 provides pumping action in the case where the shaft (slinger 3) rotates. By rotation of the shaft (slinger 3), pumping action occurs in a region in the vicinity of the slinger contact portion 22a and the lip contact portion 32 in narrow space S which is space between the flange portion 31 and the end-face lip 21. By this pumping action, even in the case where the target to be sealed oozes from the target-to-be-sealed side to the narrow space S, the target to be sealed which has oozed is returned from the narrow space S to the target-to-be-sealed side beyond the slinger contact portion 24 and the lip contact portion 32. In this manner, by the pumping action occurring by the groove 33 formed at the flange portion 31 of the slinger 3, ooze of the target to be sealed to the narrow space S is suppressed.

In the narrow space S, the target to be sealed which has further oozed outside beyond the region where the pumping action by the groove 33 occurs (hereinafter, also referred to as a pumping region) rotates around the axis line x in the rotation direction of the slinger 3 in the region adjacent to the pumping region on the inner periphery side by rotation of the shaft 52, and is retained in the region (hereinafter, also referred to as a circular current region).

At the end-face lip 21, radial projections 23 are formed on the inner peripheral surface 22, and the radial projections 23 extend from positions away from the outer edge 22b of the slinger contact portion 22a by the interval G, and at least partially extend in the circular current region. Therefore, the target to be sealed which is retained in the circular current region while rotating collides with the radial projections 23 or the target to be sealed which is retained in the circular current region while rotating is led to inner ends 23a which are end portions on the inner side (outer peripheral side) of the redial projections 23 from the outer ends 23b which are end portions on the outer side (inner periphery side) of the redial projections 23 along the radial projections 23, and the target to be sealed which is retained in the circular current region is led to the pumping region. The target to be sealed led to the pumping region by the radial projections 23 is returned to the target-to-be-sealed side by receiving pumping action.

Further, the circumferential projection 24 is formed on the inner peripheral surface of the end-face lip 21, the circumferential projection 24 extends at a position on the inner peripheral side of the inner ends 23a of the radial projections 23, in the present embodiment, extends in the circular current region. Accordingly, the target to be sealed which is retained in the circular current region while rotating collides with the circumferential projection 24, being led to the radial projections 23, and then, being led to the pumping region by the radial projections 23 so that the target to be sealed is returned to the target-to-be-sealed side by receiving pumping action. Further, the target to be sealed rotates along the circumferential projection 24, and then, the circumferential projection 24 guides the target to be sealed such that the target to be sealed is retained in the circular current region in a stable manner. Further, the circumferential projection 24 collides with the target to be sealed which flows on the inner peripheral surface 22 of the end-face lip 21 from the tip 21a side to the root 21b side, thus blocking the flow of the target to be sealed on the inner peripheral surface 22 from the tip 21a side to the root 21b side.

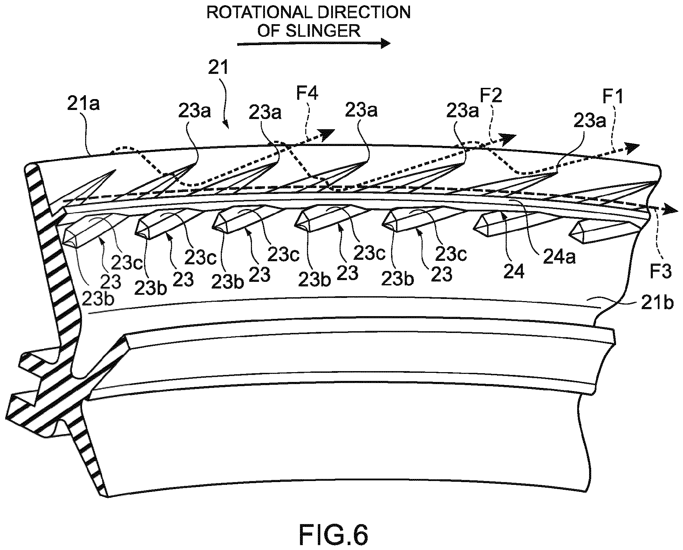

Fig. 6 is a view for illustrating the manner of flow of the target to be sealed which is caused by action of the radial projections 23 and the circumferential projection 24 on the end-face lip 21 for describing the manner of the radial projections 23 and the circumferential projection 24 on the end-face lip 21. As indicated by a broken line F1 in Fig. 6, the target to be sealed which has oozed to the circular current region beyond the pumping region collides with a side surface 23c, which is a side surface of the radial projection 23 facing the outer peripheral side, being bounced to the pumping region or led to the inner end 23a along the side surface 23c of the radial projection 23, and being returned to the pumping region from the inner end 23a. Accordingly, it is preferable that each radial projection 23 be formed on the inner peripheral surface 22 of the end-face lip 21 such that a portion of the radial projection 23 on the inner end 23a side enters the pumping region. As will be described later, it is considered that the width of the pumping region in the radial direction varies according to the rotational speed of the shaft. For this reason, it is preferable to form a portion of each of the radial projection 23 on the inner end 23a side such that it enters the pumping region regardless of the rotational speed of the shaft. Further, in the case where the entire radial projections 23 are formed to be present in the circular current region, the interval G from the outer edge 22b of the slinger contact portion 22a is set within a range where the target to be sealed oozing to the circular current region beyond the pumping region can be returned to the pumping region again as described above.

Further, there is also a target to be sealed which further flows to the root 21b side of the end surface lip 21, because the target to be sealed does not collide with the side surface 23c of the radial projection 23, is not bounced even if the target to be sealed hit against the side surface 23c and flows beyond the side surface 23c, or flows beyond the side surface 23c without being led to the inner end 23a along the side surface 23c. Also in the case where the radial projections 23 do not act as described above so that the target to be sealed cannot be returned to the pumping region again, the target to be sealed which further flows to the root 21b side of the end-face lip 21 collides with the circumferential projection 24. Accordingly, as indicated by a broken line F2 in Fig. 6, the target to be sealed which further flows to the root 21b side due to no action of the radial projections 23 collides with the outer peripheral surface 24b of the circumferential projection 24, being bounced to the pumping region, and being returned to the pumping region, alternatively, the target to be sealed is led to the radial projections 23 along the outer peripheral surface 24b of the circumferential projection 24, colliding with and being bounced on the side surface 23c of the radial projection 23, and being returned to the pumping region, alternatively, the target to be sealed is led to the inner end 23a along the side surface 23c of the radial projection 23, and, being returned to the pumping region from the inner end 23a. Further, as indicated by a broken line F3 in Fig. 6, the target to be sealed which further flows to the root 21b side due to no action of the radial projections 23 flows along the outer peripheral surface 24b of the circumferential projection 24, and being retained in the circular current region in a stable manner.

When the slinger 3 is in a rest state, the target to be sealed which has oozed from the slinger contact portion 22a and the lip contact portion 32 flows down along the inner peripheral surface 22 of the end-face lip 21 from the tip 21a side to the root 21b side due to its own weight, however, the target to be sealed collides with the outer peripheral surface 24b of the circumferential projection 24 and blocked. Accordingly, when the slinger 3 is in the rest state, that is, when the shaft 102 is in a rest state, the circumferential projection 24 can aim at preventing the target to be sealed from oozing outside. To aim at preventing a target to be sealed from oozing outside when the slinger 3 is in the rest state, it is preferable that the outer peripheral surface 24b of the circumferential projection 24 extend in an inclined manner or in a bending manner toward the outer peripheral side with respect to the axis line x. This is because such a configuration allows the target to be sealed to be easily retained between the inner peripheral surface 22 of the end-face lip 21 and the outer peripheral surface 24b of the circumferential projection 24.

As described above, there may be a case where the target to be sealed further flows to the root 21b side of the end-face lip 21, accordingly, it is preferable that the radial projections 23 be arranged such that one radial projection 23 partially overlaps with another radial projection 23 disposed adjacent to the one radial projection 23 on the side of the rotational direction of the shaft 102 (slinger 3) as viewed from the inner peripheral side (outer side) to the outer peripheral side (inner side) in the direction of the axis line x. The reason is as follows. As indicated by a broken line F4 on the left side in Fig. 6, even if the target to be sealed flows to the root 21b side of the end-face lip 21 beyond the side surface 23c of one radial projection 23 on the inner end 23a side, the target to be sealed which flows beyond the one radial projection 23 collides with the side surface 23c of the other radial projection 23 adjacent to the one radial projection 23 on the side of the rotational direction of the slinger 3. Accordingly, the target to be sealed is bounced, or the target to be sealed is led to the inner end 23a along the side surface 23c so that the target to be sealed can be returned to the pumping region. It is also preferable to arrange the radial projections 23 as follows. With a portion of one radial projection 23, which does not overlap with another radial projection 23 adjacent to the one radial projection 23 on the opposite side of the side of the rotational direction of the slinger 3 as viewed from the outer peripheral side (inner side) to the inner peripheral side (outer side) in the direction of the axis line x, another radial projection 23 adjacent to the one radial projection 23 on the side of the rotational direction of the slinger 3 partially overlaps as viewed from the inner peripheral side (outer side) to the outer peripheral side (inner side) in the direction of the axis line x.

Further, to improve a function to return the target to be sealed which has moved beyond the adjacent radial projections 23 described above to the pumping region, and to make a portion where the projections 23 which are adjacent to each other overlap with each other when seen from the inner periphery side to the outer periphery side in the axis line x direction larger, it is preferable to adjust an extending direction (angle) of the radial projections 23 and an interval (pitch) between the radial projections 23 which are adjacent to each other. Further, it is preferable that the radial projections 23 are adjacent to each other at equal intervals so that the end-face lip 21 equally has the above-described functions of the radial projections 23 in the circumferential direction.

In this manner, in the sealing apparatus 1, even if the target to be sealed further oozes to the circular current region beyond the pumping region where the pumping action is exerted, it is possible to return this target to be sealed which has oozed to the pumping region by the radial projections 23 and the circumferential projection 24, and further return the target to be sealed to the target to be sealed side by the pumping action.

The pumping action based on the grooves 33 of the slinger 3 is reduced as rotation speed of the slinger 3 becomes higher. It can be considered that this is because the pumping region contracts toward the side of the slinger contact portion 22a and the lip contact portion 32 as the rotation speed of the slinger 3 becomes higher. Therefore, in the case where the target to be sealed oozes from the target-to-be-sealed side to the narrow space S, the target to be sealed which enters the circular current region increases as the rotation speed of the slinger 3 becomes higher. If an amount of the target to be sealed which circulates in the circular current region exceeds an amount of the target to be sealed which can be retained in the circular current region, the target to be sealed further oozes inside, and there is a case where the target to be sealed further oozes outside the sealing apparatus 1.

In the sealing apparatus 1 according to the first embodiment of the present invention, as described above, even if the target to be sealed oozes to the circular current region beyond the pumping region, this oozing target to be sealed can be returned to the pumping region by the radial projections 23 and the circumferential projection 24, and further can be returned to the target-to-be-sealed side by pumping action. In addition, the circumferential projection 24 can guide the target to be sealed oozing to the circular current region beyond the pumping region such that the target to be sealed is retained in the circular current region in a stable manner. Accordingly, even if the rotational speed of the slinger 3 becomes high, thus increasing the amount of the target to be sealed which is retained in the circular current region, this target to be sealed retained in the circular current region can be returned to the pumping region by the radial projections 23 and the circumferential projection 24, accordingly, it is possible to suppress that the amount of the target to be sealed which circulates in the circular current region exceeds the amount of target to be sealed which can be retained in the circular current region. Further, even if pumping action reduces due to the rotation of the slinger 3 at high speed, the target to be sealed can be returned to the pumping region by the radial projections 23 and the circumferential projection 24, accordingly, during the rotation of the slinger 3 at high speed, it is possible to increase the amount of the target to be sealed which can be returned to the target-to-be-sealed side by pumping action. Further, the circumferential projection 24 can guide the target to be sealed such that the target to be sealed is retained in the circular current region in a stable manner, accordingly, it is possible to increase the amount of target to be sealed which can be retained in the circular current region, therefore, even if pumping action reduces due to the rotation of the slinger 3 at high speed, it is possible to suppress further leakage of the target to be sealed to the outside.

As described above, according to the sealing apparatus 1 of the first embodiment of the present invention, even in the case where pumping action caused by the grooves 33 of the slinger 3 is utilized, it is possible to suppress ooze of the target to be sealed regardless of a value of rotational speed of the shaft.

Next, a sealing apparatus 4 according to a second embodiment of the present invention will be described. The sealing apparatus 4 according to the second embodiment of the present invention differs from the above-mentioned sealing apparatus 1 according to the first embodiment of the present invention with respect to the mode of the circumferential projection, includes a circumferential projection 41 in place of the circumferential projection 24. Hereinafter, the configurations having functions same as or similar to the corresponding configurations of the above-mentioned sealing apparatus 1 according to the first embodiment of the present invention are given the same reference numerals, and the repeated description is omitted, and only different configurations will be described.

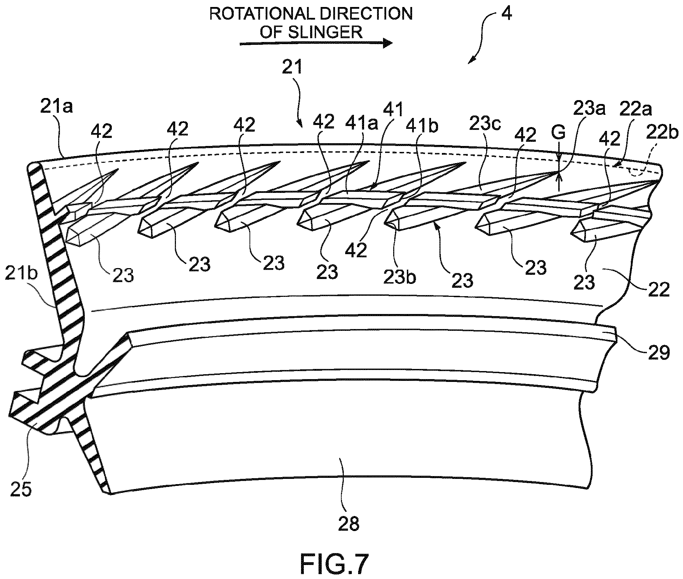

Fig. 7 is a view corresponding to the above-mentioned Fig. 3, and a partially enlarged perspective view of an elastic body portion 20 of the sealing apparatus 4, the elastic body portion 20 on the inner peripheral side from a base portion 25 is shown in a state being cut on a plane taken along the axis line x. In the sealing apparatus 4, the circumferential projection 41, in the similar manner to the above-mentioned circumferential projection 24 of the sealing apparatus 1, extends around the axis line x on the outer side (inner peripheral side) of inner ends 23a of radial projections 23, projects from an end-face lip 21 at a position on the outer side of a slinger contact portion 22a in the direction of the axis line x.

Specifically, on an inner peripheral surface 22 of the end-face lip 21, the circumferential projection 41 is formed on the same or substantially the same circumference centered or substantially centered on the axis line x. As described above, the circumferential projection 41 extends around the axis line x at a position on the outer side of the inner ends 23a of the radial projections 23 (on the root 21b side of the end-face lip 21), for example, the circumferential projection 41 is provided on the outer side (or the inner peripheral side) of the pumping region in the sealing apparatus 4.

Further, the circumferential projection 41, in the similar manner to the above-mentioned circumferential projection 24 (see Fig. 1 and Fig. 2), projects from the end-face lip 21 in a region on the outer side of the slinger contact portion 22a in the direction of the axis line x, a tip 41a, which is the end portion of the circumferential projection 41 on the inner side, is disposed on the outer side of the slinger contact portion 22a in the direction of the axis line x. As described above, the circumferential projection 41 is formed in a shape such that the circumferential projection 41 does not contact a slinger 3 in a usage state of the sealing apparatus 4, accordingly, sliding resistance to the slinger 3 does not increase by the circumferential projection 41.

Further, the circumferential projection 41, in the similar manner to the above-mentioned circumferential projection 24 (see Fig. 2), projects more toward the inner side in the direction of the axis line x than the radial projections 23. It is not always necessary that the circumferential projection 41 projects more toward the inner side in the direction of the axis line x than the radial projections 23, the projection amount of the circumferential projection 41 in the direction of the axis line x may be equal to the projection amount of the radial projection 23 in the direction of the axis line x. Further, the shape of the circumferential projection 41 in cross section (see Fig. 2) orthogonal to the extending direction of the circumferential projection 41 is not limited to a rectangular shape, and may be any of various shapes including a triangular shape, a quadrangular shape, an inverted U shape and the like, for example. It is preferable that an outer peripheral surface 41b, which is the surface of the circumferential projection 41 faces the outer peripheral side, be a surface facing the outer peripheral side at least in the usage stat of the sealing apparatus 4, and be a surface extending along the axis line x, or be a surface which is inclined toward the inner peripheral surface 22 side and extends obliquely toward the outer peripheral side with respect to the axis line x.

The circumferential projection 41, as shown in Fig. 7, has a clearance 42 between the circumferential projection 41 and a side surface 23c facing the opposite side of the rotational direction of the slinger 3 of at least one radial projection 23. The clearance 42 extends in the circumferential direction, and is formed at a portion of a space formed between the radial projections 23 disposed adjacent to each other. That is, in at least one of spaces each is formed between the radial projections 23 disposed adjacent to each other, the circumferential projection 41 is cut at a partial range on the opposite side of the rotational direction of the slinger 3 from the side surface 23c of one radial projection 23 on the side of the rotational direction of the slinger 3, the clearance 42 is formed at this cut portion in the circumferential projection 41. The clearance 42 may be formed in a plurality of spaces each of which is formed between the radial projections 23 disposed adjacent to each other, in the embodiment shown in the drawing, the clearance 42 is formed at all spaces each of which is formed between the radial projections 23 disposed adjacent to each other.

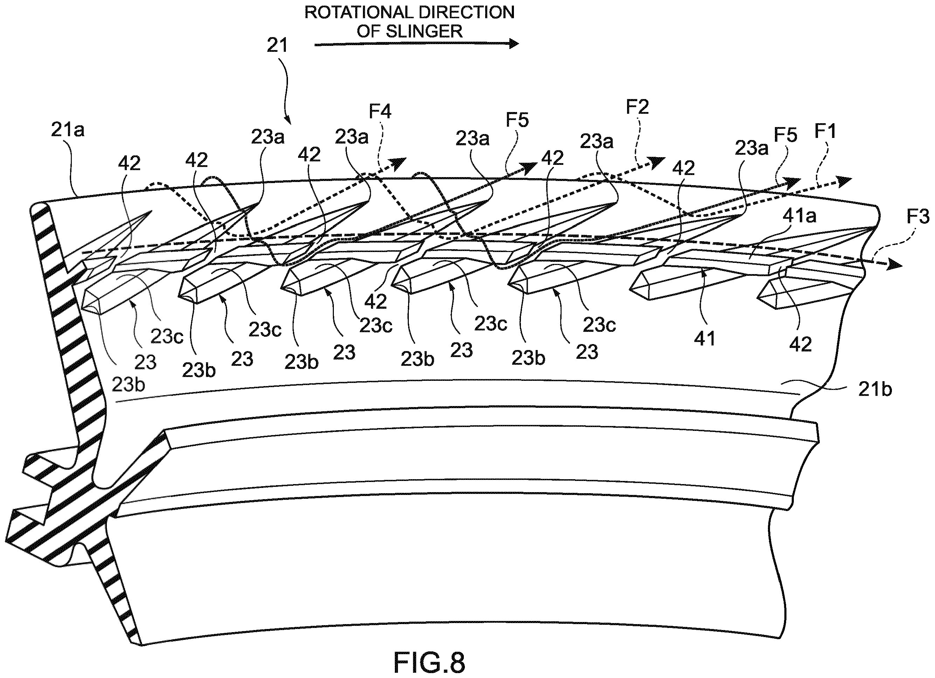

Next, the manner of operation of the sealing apparatus 4 having the above-mentioned configuration will be described. Fig. 8 is a view for illustrating the state of flow of a target to be sealed which is caused by action of the radial projections 23 and the circumferential projection 41 on the end-face lip 21. In the sealing apparatus 4, as shown in Fig. 8, in the similar manner to the above-mentioned sealing apparatus 1, the radial projections 23 act on oozing target to be sealed (broken lines F1, F4), and the circumferential projection 41 acts on the oozing target to be sealed in the similar manner to the above-mentioned circumferential projection 24 of the sealing apparatus 1 (broken lines F2, F3). Further, in the similar manner to the above-mentioned circumferential projection 24 of the sealing apparatus 1, the circumferential projection 41 functions as a blocking member when a shaft 52 is in a rest state.

Further, even if a target to be sealed further flows to inner peripheral side beyond the circumferential projection 41 as shown in Fig. 8, when the target to be sealed collides with the radial projection 23, the target to be sealed is bounced to the pumping region side, or is led in the direction to the inner peripheral end 23a along the side surface 23c of the radial projection 23 so that the target to be sealed reaches the circumferential projection 41. In the sealing apparatus 4 according to the present embodiment, the circumferential projection 41 has the clearances 42, accordingly, the target to be sealed which flows beyond the circumferential projection 41 and is bounced on the radial projections 23, in addition, the target to be sealed which is led in the direction to the inner peripheral ends 23a along the side surfaces 23c of the radial projections 23 can be returned to the pumping region side of the circumferential projection 41 through the clearance 42 (broken line F5). As described above, the radial projections 23 and the circumferential projection 42 act on the target to be sealed which has been returned to the pumping region side of the circumferential projection 41 through the clearance 42 and hence, the target to be sealed can be returned to the pumping region. In this manner, in the sealing apparatus 4, the target to be sealed which has leaked beyond the circumferential projection 41 can be also returned to the pumping region and hence, it is possible to further suppress the leakage of the target to be sealed to the outside.

As described above, according to the sealing apparatus 4 of the second embodiment of the present invention, even in the case where pumping action caused by the grooves 33 of the slinger 3 is utilized, it is possible to suppress ooze of the target to be sealed regardless of a value of rotational speed of the shaft.

Hereinafter, a sealing apparatus 5 according to a third embodiment of the present invention will be described with reference to the accompanying drawings.

The sealing apparatus 5 according to the third embodiment of the present invention differs from the above-mentioned sealing apparatus 1 according to the first embodiment of the present invention with respect to the mode of the elastic body portion. Hereinafter, the configurations having functions same as or similar to the corresponding configurations of the above-mentioned sealing apparatus 1 according to the first embodiment of the present invention are given the same reference numerals, and the repeated description is omitted, and only different configurations will be described.

Fig. 9 is a cross-sectional view showing a cross section taken along an axis line x for illustrating the schematic configuration of the sealing apparatus 5 according to the third embodiment of the present invention, Fig. 10 is a partially enlarged cross-sectional view showing, in an enlarged manner, a part of the cross section taken along the axis line x of the sealing apparatus 5. The sealing apparatus 5 according to the present embodiment, in the similar manner to the above-mentioned sealing apparatus 1, is a sealing apparatus for sealing an annular gap between a shaft and a hole into which this shaft is to be inserted.

As shown in Fig. 9 and Fig. 10, the sealing apparatus 5 includes a sealing apparatus body 50, which corresponds to the sealing apparatus body 2 of the above-mentioned sealing apparatus 1, and a slinger 3. The sealing apparatus body 50 includes a reinforcing ring 10, and an elastic body portion 51 which is formed of an elastic body mounted on the reinforcing ring 10, and which is annular around the axis line x. The elastic body portion 51 differs from the elastic body portion 20 of the above-mentioned sealing apparatus 1 in the mode of the radial projections, and includes radial projections 52 which differ from the radial projections 23 of the above-mentioned elastic body portion 20, in addition, the mode of the circumferential projection is different, the elastic body portion 51 includes circumferential projections 53, 54 which differ from the circumferential projection 24 of the above-mentioned elastic body portion 20.

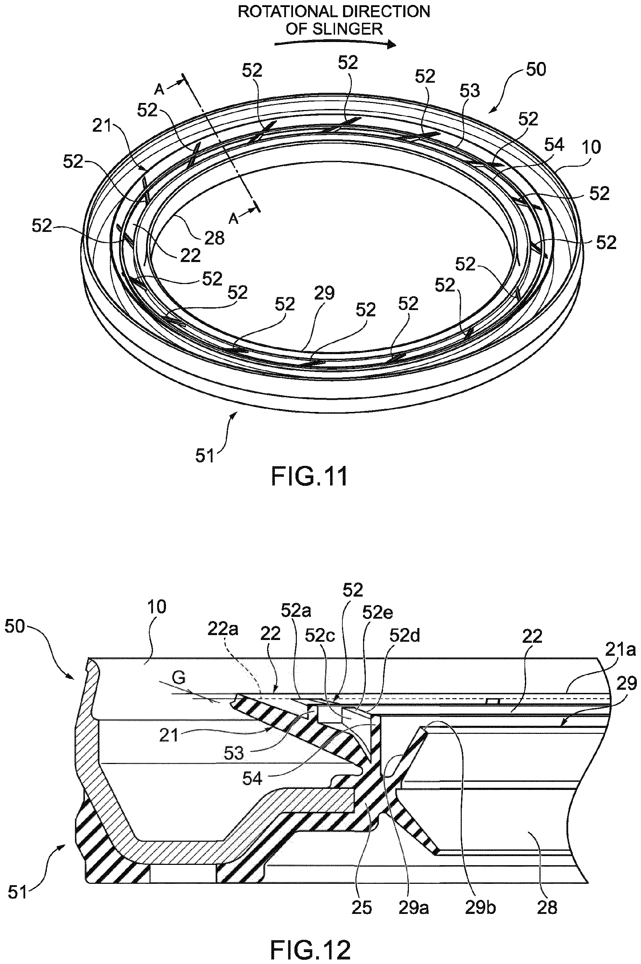

As shown in Fig. 11, in the elastic body portion 51, a plurality of radial projections 52 are formed on an inner peripheral surface 22 of an end-face lip 21 side by side in the circumferential direction. In the similar manner to the radial projections 23, the radial projections 52 extend, as will be described later, from the outer side toward the inner side in a spiral manner in the rotational direction of a shaft 102 (slinger 3), the radial projections 52 are formed on the end-face lip 21 on the inner peripheral side of the slinger contact portion 22a.

As shown in Fig. 11 and Fig. 12, on the inner peripheral surface 22 of the end-face lip 21, the plurality of radial projections 52 are arranged at equal angular intervals or substantially equal angular intervals in the circumferential direction on the same or substantially the same circumference, and being arranged at equal pitch intervals or substantially equal pitch intervals. As described above, each radial projection 52 extends from the outer side (lower side in Fig. 11 and Fig. 12) toward the inner side (upper side in Fig. 11 and Fig. 12) in a spiral manner in the rotational direction of the shaft 102 (slinger 3). That is, each radial projection 52 extends from the root 21b side toward the tip 21a side of the end-face lip 21 in an inclined manner toward the rotational direction of the slinger 3. Further, each radial projection 52 is formed away from the slinger contact portion 22a by a, the radial projection 52 is formed on the inner peripheral side (outer side) of the slinger contact portion 22a, that is, on the root 21b side of the end-face lip 21.

In the similar manner to the above-mentioned radial projections 23, the radial projections 52 are formed on the end-face lip 21 at intervals from the slinger contact portion 22a, inner ends 52a, which are the end portions of the radial projections 52 on the inner side (outer peripheral side), are disposed at positions away from an outer edge 22b of the slinger contact portion 22a by a predetermined interval G in the direction along the axis line x along the inner peripheral surface 22 (see Fig. 3). Further, the radial projections 52 extend to a circumferential projection 54 which will be described later along the inner peripheral surface 22 of the end-face lip 21, outer ends 52b, which are the end portions of the radial projections 52 on the outer side (inner peripheral side), are connected to an outer peripheral surface 54b of the circumferential projection 54 which will be described later.

As will be described later, in the similar manner to the above-mentioned radial projections 23 of the sealing apparatus 1, each radial projection 52 is formed in a shape such that the radial projection 52 does not contact the slinger 3 in the usage state of the sealing apparatus 5. That is, the height of each radial projection 52 from the inner peripheral surface 22 and the interval G are set such that the radial projection 52 does not contact an outer surface 31d of a flange portion 31 of the slinger 3 in the usage state of the sealing apparatus 5. In the present embodiment, as shown in Fig. 10 and Fig. 12, the radial projection 52 is formed such that the height of the radial projection 52 from the inner peripheral surface 22 increases from the inner end 52a toward the outer end 52b. Further, the outer end 52b of the radial projection 52 extends over a portion of the entire width of the outer peripheral surface 54b of the circumferential projection 54 in the direction of the axis line x. The radial projection 52 may extend to an intermediate lip 29. The outer end 52b of the radial projection 52 may be connected to an outer peripheral surface 29a, which is the surface of the intermediate lip 29 on the outer peripheral side. The outer end 52b of the radial projection 52 may extend to a position between the intermediate lip 29 and the circumferential projection 54.

As described above, on the inner peripheral surface 22 of the end-face lip 21, each radial projection 52 is formed to have a rib shape toward the inner peripheral side from a position away from the outer edge 22b of the slinger contact portion 22a by the interval G. Side surfaces 52c, 52d, which are surfaces of the radial projection 52 facing in the circumferential direction, extend orthogonally or substantially orthogonally to the inner peripheral surface 22 of the end-face lip 21. The side surfaces 52c, 52d may extend in an inclined manner without being orthogonal to the inner peripheral surface 22. For example, the side surface 52c may be inclined to the inner peripheral surface 22 side. The side surface 52c and the side surface 52d extend parallel to or substantially parallel to each other. An end surface 52e, forming the surface of the radial projection 52 on the slinger 3 side, extends in a planar manner or in a substantially planar manner. As shown in Fig. 12, the shape of a portion of the end surface 52e on the inner end 52a side is set such that the inner end 52a of the end surface 52e is smoothly connected to the inner peripheral surface 22 of the end-face lip 21. For example, the end surface 52e is formed by bending or curving a portion on the inner end 52a side from other portion.

The height of the radial projection 52 from the inner peripheral surface 22 is not limited to the above-mentioned specific shape. The radial projection 52 may have a fixed height from the inner peripheral surface 22 within a range from the inner end 52a to the outer end 52b. The height of the radial projection 52 from the inner peripheral surface 22 may decrease from the inner end 52a toward the outer end 52b. Alternatively, the height of the radial projection 52 from the inner peripheral surface 22 within a range from the inner end 52a to the outer end 52b may be any of the various combinations of the above-mentioned increasing height, decreasing height, and fixed height. Further, the shape of the radial projection 52 in cross section orthogonal to the extending direction of the radial projection 52 is not limited to a rectangular shape, and may be any of various shapes including a triangular shape, a quadrangular shape, an inverted U shape and the like, for example. The radial projection 52 is formed in a shape such that the radial projection 52 does not contact the slinger 3 in the usage state of the sealing apparatus 5, therefore sliding resistance to the slinger 3 does not increase by the radial projections 52.

Further, in the similar manner to the above-mentioned radial projection 23 (see Fig. 3), the shape of the radial projection 52 in the extending direction of the radial projection 52 may be any of various shapes, such as a shape which is tapered from the outer end 52b toward the inner end 52a, and a shape where the width in the direction orthogonal to the extending direction varies toward the extending direction within a range between the outer end 52b and the inner end 52a. Further, the radial projection 52 may extend between the inner end 52a and the outer end 52b in a straight manner or in a bending manner.

On the inner peripheral surface 22 of the end-face lip 21, at least one circumferential projection is formed on the same or substantially the same circumference centered or substantially centered on the axis line x. As shown in Fig. 9 to Fig. 12, in the sealing apparatus 5 according to the present embodiment, the two circumferential projections 53, 54 are formed on the end-face lip 21 as the circumferential projections.

In the similar manner to the above-mentioned circumferential projection 24, as shown in Fig. 10 and Fig. 12, the circumferential projection 53 extends around the axis line x on the outer side (outer end 52b side) of the inner ends 52a of the radial projections 52. In the present embodiment, the circumferential projection 53 is formed on the inner peripheral side of the pumping region in the sealing apparatus 5. It is preferable that the circumferential projection 53 be formed in a circular current region.

As shown in Fig. 10 and Fig. 12, the circumferential projection 53 projects from the end-face lip 21 in a region on the outer side of the slinger contact portion 22a in the direction of the axis line x, and a tip 53a, which is the end portion of the circumferential projection 53 on the inner side, is disposed on the outer side of the slinger contact portion 22a in the direction of the axis line x. As described above, the circumferential projection 53 is formed in a shape such that the circumferential projection 53 does not contact the slinger 3 in the usage state of the sealing apparatus 5, therefore sliding resistance to the slinger 3 does not increase by the circumferential projection 53.

As shown in Fig. 10 and Fig. 12, the circumferential projection 53 projects more toward the inner side in the direction of the axis line x than the radial projection 52. It is not always necessary that the circumferential projection 53 projects more toward the inner side in the direction of the axis line x than the radial projection 52, and the projection amount of the circumferential projection 53 in the direction of the axis line x may be equal to the projection amount of the radial projection 52 in the direction of the axis line x. Further, the shape of the circumferential projection 53 in cross section (see Fig. 10) orthogonal to the extending direction of the circumferential projection 53 is not limited to a rectangular shape, and may be any of various shapes including a triangular shape, a quadrangular shape, an inverted U shape and the like, for example.

It is preferable that an outer peripheral surface 53b, which is the surface of the circumferential projection 53 facing the outer peripheral side, be a surface extending along the axis line x at least when the sealing apparatus 5 is in the usage state, or be a surface inclined toward the inner peripheral surface 22 side, obliquely toward the outer peripheral side with respect to the axis line x. That is, it is preferable that the outer peripheral surface 53b of the circumferential projection 53 have a conical surface shape or a substantially conical surface shape whose diameter increases as progress toward the inner side in the direction of the axis line x.

As shown in Fig. 10 and Fig. 12, the circumferential projection 54 extends around the axis line x at a position on the outer side or the inner peripheral side of the circumferential projection 53 (on the root 21b side of the end-face lip 21). As shown in Fig. 10 and Fig. 12, the circumferential projection 54 projects from the end-face lip 21 in a region on the outer side of the slinger contact portion 22a in the direction of the axis line x, a tip 54a, which is the end portion of the circumferential projection 54 on the inner side, is disposed on the outer side of the slinger contact portion 22a in the direction of the axis line x. As described above, the circumferential projection 54 is formed in a shape such that the circumferential projection 54 does not contact the slinger 3 in the usage state of the sealing apparatus 5, therefore sliding resistance to the slinger 3 does not increase by the circumferential projection 54.

As shown in Fig. 10 and Fig. 12, the circumferential projection 54 projects more toward the inner side in the direction of the axis line x than the radial projection 52. It is not always necessary that the circumferential projection 54 projects more toward the inner side in the direction of the axis line x than the radial projection 52. The projection amount of the circumferential projection 54 in the direction of the axis line x may be equal to the projection amount of the radial projection 52 in the direction of the axis line x. Further, the shape of the circumferential projection 54 in cross section (see Fig. 10) orthogonal to the extending direction of the circumferential projection 54 is not limited to a rectangular shape, and may be any of various shapes including a triangular shape, a quadrangular shape, an inverted U shape and the like, for example.

It is preferable that the outer peripheral surface 54b, which is the surface of the circumferential projection 54 facing the outer peripheral side, be a surface extending along the axis line x at least when the sealing apparatus 5 is in the usage state, or be a surface inclined toward the inner peripheral surface 22 side, extending obliquely toward the outer peripheral side with respect to the axis line x. That is, it is preferable that the outer peripheral surface 54b of the circumferential projection 54 have a conical surface shape or a substantially conical surface shape whose diameter increases as progress toward the inner side in the direction of the axis line x.

As described above, each radial projection 52 extends toward the inner peripheral side to reach the circumferential projection 54. The outer end 52b of the radial projection 52 is connected to the outer peripheral surface 54b of the circumferential projection 54. For example, the circumferential projection 54 is formed at a position (range) where the tip 54a faces the outer-peripheral-side disk portion 31b in the radial direction.

Next, the manner of operation of the sealing apparatus 5 having the above-mentioned configuration will be described. The radial projections 52 act on an oozing target to be sealed in the similar manner to the radial projections 23 of the above-mentioned sealing apparatus 1 (see broken lines F1, F4 in Fig. 6). The circumferential projection 53 acts in the similar manner to the circumferential projection 24 of the above-mentioned sealing apparatus 1 (F2, F3 in Fig. 6). Further, the circumferential projection 54 disposed on the inner peripheral side acts on a target to be sealed which flows beyond the circumferential projection 53 on the outer peripheral side, and leaks to the further outside. Specifically, the circumferential projection 54 collides with a target to be sealed which further leaks outside, thus bouncing the target to be sealed to the inner peripheral side. When this bounced target to be sealed reaches the radial projection 52 on the inner side of the circumferential projection 53, the radial projection 52 can return the target to be sealed to the pumping region by action of the side surface 52c. As described above, the circumferential projection 54 has a function of supporting the function of the radial projection 52 to return the target to be sealed to the pumping region.

In the similar manner to the circumferential projection 53 on the inner peripheral side, the circumferential projection 54 can retain the target to be sealed in the circular current region in a stable manner. Further, when the slinger 3 is in a rest state, the circumferential projection 54 can block the target to be sealed which flows down along the inner peripheral surface 22 of the end-face lip 21 from the tip 21a side to the root 21b side due to its own weight.

As described above, in the sealing apparatus 5 according to the third embodiment of the present invention, the target to be sealed which has oozes beyond the slinger contact portion 22a and the lip contact portion 32 can be returned to the pumping region by the radial projections 52 and the circumferential projections 53, 54. Accordingly, even during the rotation of the shaft 102 at high speed where the pumping region is reduced, the large amount of target to be sealed can be retained in the circular current region by the circumferential projections 53, 54, thus increasing the amount of target to be sealed which is to be returned to the pumping region. Further, the circumferential projections 53, 54 can suppress the leakage of a target to be sealed to the intermediate lip 28 side when the shaft 102 is in a rest state.

As described above, according to the sealing apparatus 5 of the third embodiment of the present invention, even in the case where pumping action caused by the grooves 33 of the slinger 3 is utilized, it is possible to suppress ooze of a target to be sealed regardless of a value of rotational speed of a shaft.

Next, the modifications of the sealing apparatus 1, 4, 5 according to the embodiment of the present invention will be described.

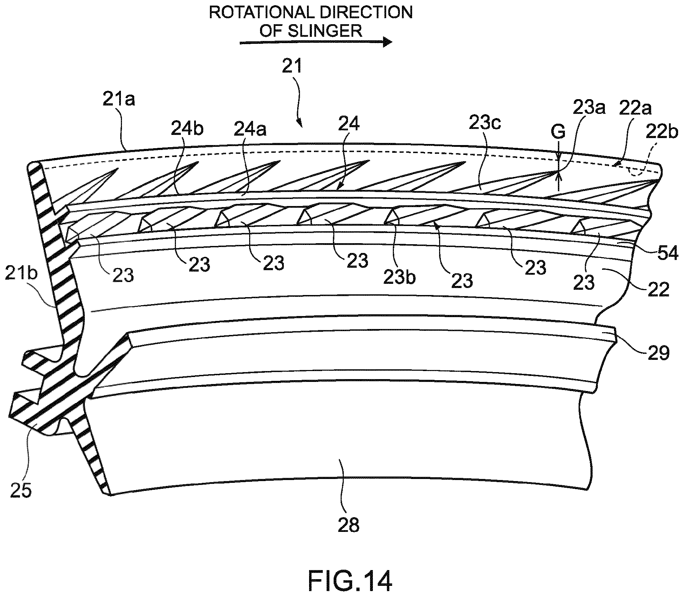

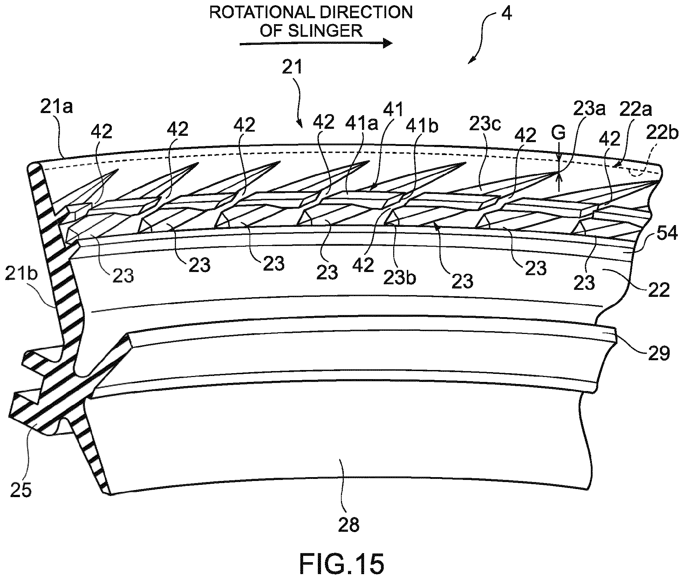

Fig. 14 is a view showing the modification of the sealing apparatus 1 according to the first embodiment of the present invention. Fig. 15 is a view showing the modification of the sealing apparatus 4 according to the second embodiment of the present invention. The end-face lip 21 of the sealing apparatus 1, 4 may include a plurality of circumferential projections. For example, as shown in Fig. 14 and Fig. 15, the end-face lip 21 of the sealing apparatus 1, 4 may further include the circumferential projection 54, which the end-face lip 21 of the sealing apparatus 5 includes, in addition to the circumferential projection 24.

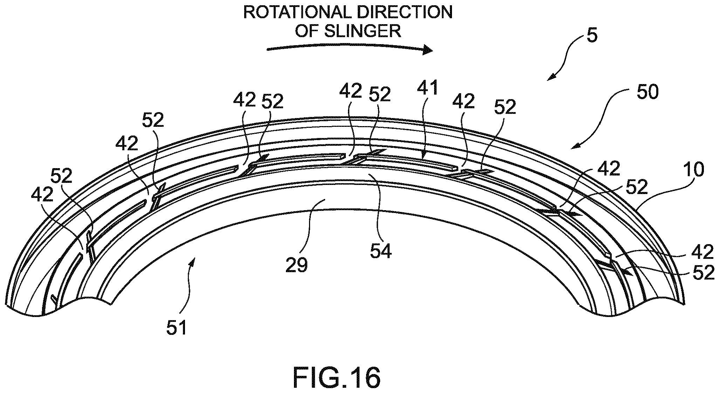

Fig. 16 is a view showing the modification of the sealing apparatus 5 according to the third embodiment of the present invention. As shown in Fig. 16, in the similar manner to the circumferential projection 41 of the sealing apparatus 4, the circumferential projection 53 on the end-face lip 21 may have a clearance 42 between the circumferential projection 53 and the side surface 52c of at least one radial projection 52 facing the opposite side of the rotational direction of the slinger 3. In the modification shown in Fig. 16, the clearance 42 is formed in all spaces each of which is formed between the radial projections 52 disposed adjacent to each other.

The radial projections 23, 52 are described to extend in a spiral manner. However, the configuration may be adopted where the radial projections 23, 52 extend on the inner peripheral surface 22 of the end-face lip 21 to form any of various shapes, and are arranged in a spiral manner on the inner peripheral surface 22 of the end-face lip 21. The side surfaces 23c, 23d of each projection 23 and the side surfaces 52c, 52d of each projection 52 may have a planar surface or a curved surface.

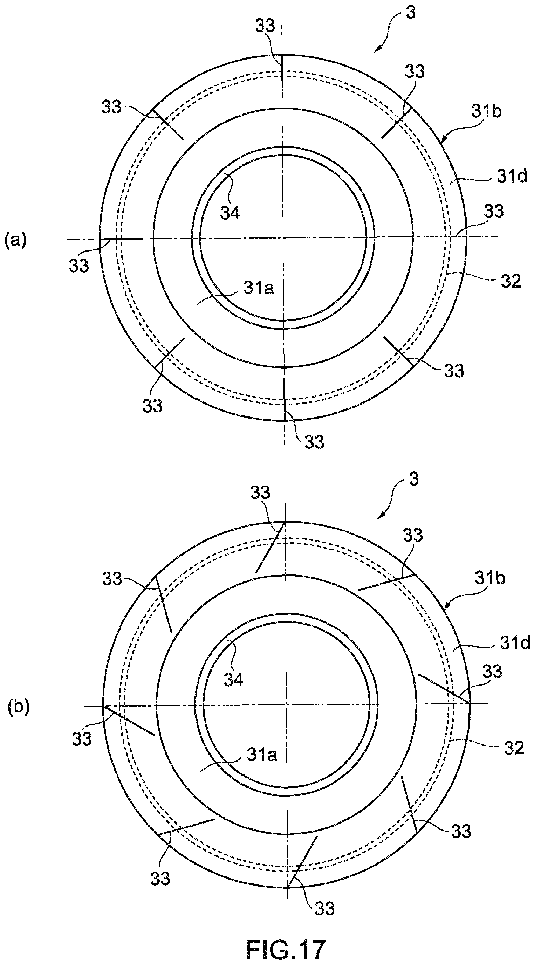

As described above, the grooves 33 formed on the slinger 3 are not limited to have a screw (four-start screw) shape shown in Fig. 4, and may have another shape. For example, as shown in Fig. 17(a), the groove 33 may be a groove which extends from the inner peripheral side toward the outer peripheral side in a radial manner centered or substantially centered on the axis line x. Alternatively, as shown in Fig. 17(b), the groove 33 may be a groove which extends in an inclined manner to the circumferential direction.

In the sealing apparatus 1, 4, 5, the elastic body portion 20, 51 is described to include the dust lip 28 and the intermediate lip 29. However, it is not always necessary that the elastic body portion 20, 51 includes the dust lip 28 and the intermediate lip 29. The elastic body portion 20, 51 may include only either one of the dust lip 28 or the intermediate lip 29.

The sealing apparatus 1, 4, 5 according to the present embodiment is described to be applied to a crank hole of an engine. However, an application target of the sealing apparatus according to the present invention is not limited to the crank hole of the engine. The present invention is applicable to all configurations which can utilize advantageous effects provided by the present invention, such as other vehicles, general-purpose machines, and industrial machines.

### List of Reference Signs

- 1, 4, 5: sealing apparatus
- 2, 50: sealing apparatus body
- 3: slinger
- 10: reinforcing ring
- 11: tubular portion
- 11a: outer periphery side cylindrical portion
- 11b: inner periphery side cylindrical portion
- 11c: connecting portion
- 12, 14: disk portion
- 13: conical ring portion
- 20, 51: elastic body portion
- 21: end-face lip
- 21a: tip
- 21b: root
- 22: inner peripheral surface
- 22a: slinger contact portion
- 22b: outer edge
- 23, 52: radial projection
- 23a, 52a: inner end
- 23b, 52b: outer end
- 23c, 23d, 52c, 52d: side surface
- 24, 41, 53, 54: circumferential projection
- 24a, 41a, 53a, 54a: tip
- 24b, 41b, 53b, 54b: outer peripheral surface
- 25: base portion
- 26: gasket portion
- 27: rear cover portion
- 28: dust lip
- 29: intermediate lip
- 29a: outer peripheral surface
- 31: flange portion
- 31a: inner peripheral side disk portion
- 31b: outer peripheral side disk portion
- 31c: connecting portion
- 31d: outer side surface
- 32: lip contact portion
- 33: groove
- 34: tubular portion
- 35: cylindrical portion
- 35a: inner peripheral surface
- 35b: outer peripheral surface
- 42: clearance
- 52e: end face
- 100: housing
- 101: shaft hole
- 101a: inner peripheral surface
- 102: shaft
- 102a: outer peripheral surface
- G: interval
- S: narrow space
- x axis: line

## Claims

1. A sealing apparatus for sealing an annular gap between a shaft and a hole into which the shaft is to be inserted, the sealing apparatus being **characterized by** comprising:
a sealing apparatus body to be fitted into the hole; and
a slinger to be mounted on the shaft, wherein
the sealing apparatus body includes a reinforcing ring annular around an axis line, and an elastic body portion which is formed of an elastic body attached to the reinforcing ring and which is annular around the axis line,
the slinger includes a flange portion which is a portion extending toward an outer peripheral side and annular around the axis line,
the elastic body portion includes an end-face lip which is a lip extending toward one side in a direction of the axis line, contacting the flange portion from another side in the direction of the axis line, and annular around the axis line,
at least one groove is formed on the other side of the flange portion of the slinger,
on a surface of the end-face lip on an inner peripheral side, a plurality of radial projections are formed side by side in a circumferential direction, and at least one circumferential projection is formed,
the radial projections extend from the other side toward the one side in a spiral manner in a rotational direction of the shaft, and are formed on the inner peripheral side of a slinger contact portion which is a portion of the end-face lip where the end-face lip contacts the slinger, and
the circumferential projection extends around the axis line on the other side of an end portion of the radial projection on the one side, and projects from the end-face lip on the other side of the slinger contact portion in the direction of the axis line.

2. The sealing apparatus according to claim 1, wherein
the circumferential projection forms a clearance between the circumferential projection and a side surface of at least one of the radial projections which faces an opposite side of the rotational direction of the shaft.

3. The sealing apparatus according to claim 1 or 2, wherein
the circumferential projection is formed on the other side of a pumping region in the sealing apparatus.

4. The sealing apparatus according to any one of claims 1 to 3, wherein
the radial projections are formed on the end-face lip at intervals from the slinger contact portion.

5. The sealing apparatus according to claim 4, wherein
the radial projections are formed at intervals from the slinger contact portion so as to reach a pumping region from a circular current region in the sealing apparatus.

6. The sealing apparatus according to any one of claims 1 to 5, wherein
the groove formed on the slinger is a screw groove.
